# EUROPÄISCHE PATENTSCHRIFT

(11) **EP 1 128 927 B1**
(45) Veröffentlichungstag und Bekanntmachung des Hinweises auf die Patenterteilung: **13.04.2005**
(21) Anmeldenummer: 99960882.1
(22) Anmeldetag: 10.11.1999
(51) Int. Cl.: B23K 26/02

(54) **VERFAHREN UND VORRICHTUNG ZUM BEARBEITEN VON WERKSTÜCKEN MIT HOCHENERGIESTRAHLUNG**
METHOD AND DEVICE FOR MACHINING WORKPIECES USING HIGH-ENERGY RADIATION
PROCEDE ET DISPOSITIF POUR L'USINAGE DE PIECES A L'AIDE D'UN RAYONNEMENT A HAUTE ENERGIE

(30) Priorität: 12.11.1998 DE 19852302
(43) Veröffentlichungstag der Anmeldung: 05.09.2001
(73) Patentinhaber: Fraunhofer-Gesellschaft zur Förderung der angewandten Forschung e.V., 80686 München (DE)
(72) Erfinder: KRATZSCH, Christian, D-40474 Düsseldorf (DE); KAIERLE, Stefan, D-52134 Herzogenrath (DE); ABELS, Peter, D-52477 Alsdorf (DE)
(74) Vertreter: Draudt, Axel Hermann Christian, Dipl.-Ing.
(86) Internationale Anmeldenummer: PCT/DE1999/003578
(87) Internationale Veröffentlichungsnummer: WO 2000/029166

(56) Entgegenhaltungen:
- EP-A- 0 038 297
- WO-A-89/11260
- WO-A-97/15417
- FR-A- 2 039 520
- US-A- 3 689 159

## Beschreibung

Die Erfindung bezieht sich auf ein Verfahren mit den Merkmalen des Oberbegriffs des Anspruchs 1.

Ein Verfahren mit den vorgenannten Verfahrensschritten ist allgemein bekannt. Es dient beispielsweise einer Schweißbearbeitung von Werkstücken, bei der die Prozeßüberwachungseinrichtung eine Keyhole-Überwachung der Bearbeitungsstelle durchführt und mit der Fremdmeßlichtquelle eine Abstandsmessung erfolgt, mit der der Abstand zwischen der Bearbeitungsoptik und dem Werkstück gemessen oder geregelt wird. Die vom Werkstück ausgehende Lichtstrahlung, nämlich infolge des Schweißprozesses entstehende Sekundär- oder Wärmestrahlung, gelangt gleichachsig mit der Hochenergie- oder Laserstrahlung in die Bearbeitungsoptik und wird hier für den Detektor der Prozeßüberwachungseinrichtung ausgekoppelt. Eine Abstandsmessung beziehungsweise eine berührungslose Vermessung an der Geometrie des Werkstücks erfolgt jedoch mit Empfangseinheiten, die außerhalb der Bearbeitungsoptik angebracht sind. Außerhalb der Bearbeitungsoptik angebrachte Meßsysteme verursachen jedoch Probleme wegen der in der Industrieumgebung auftretenden Verschmutzungen der optischen Systeme und sie behindern den Bearbeitungskopf, der weniger gut zugänglich ist und der sich bei komplizierten, insbesondere dreidimensionalen Werkstückgeometrien weniger gut einsetzen läßt. Generell ist festzustellen, daß die Verfahren der Werkstückbearbeitung mit online erfolgender Beobachtung der Werkstücke bislang nur mit auf die jeweilige Aufgabenstellung spezialisierten Einzelsystemen durchgeführt wird.

Ferner beschreibt die EP-A-038297 ein Verfahren zum Entgraten eines Schneider'schen Instruments mittels eines Laserstrahls, der über einen weiteren von einer Fremdlichtquelle in den Strahlengang eingekoppelten sogenannten Ausrichtstrahl geführt werden kann. Beide koinzidenten Strahlen treffen nach der Behandlung des Instruments entweder direkt oder nach Reflexion auf einen außerhalb des Strahlengangs angeordneten Detektor, der Steuersignale ausgibt.

Demgegenüber liegt der Erfindung die Aufgabe zugrunde, ein Verfahren mit eingangs genannten Verfahrensschritten so zu verbessern, daß eine Kombination der Prozeßüberwachung und weitere Überwachungsmessungen an den Werkstücken ermöglicht wird.

Diese Aufgabe wird durch die im Kennzeichen des Anspruchs 1 aufgeführten Verfahrensschritte gelöst. Für die Erfindung ist von Bedeutung, daß nicht nur die der Prozeßüberwachung dienende Lichtstrahlung von der Bearbeitungsoptik erfaßt wird, sondern auch das vom Werkstück reflektierte Meßlicht der optischen Messung. Infolgedessen ist es nicht mehr notwendig, am Bearbeitungskopf beziehungsweise in der Nähe der Bearbeitungsoptik Meßsysteme für das Meßlicht einzusetzen, nämlich Linsensysteme, die im Industriebetrieb verschmutzen können und die das Anwendungsspektrum der Werkstückbearbeitung beschränken.

Das Verfahren ist für alle Arten von Laserstrahlquellen geeignet, beispielsweise für CO₂-Laser, für Nd:YAG-Laser sowie für Diodenlaser. Das Verfahren ist auch für alle Arten der Materialbearbeitung mit Hochenergie- oder Laserstrahlung geeignet, wie für das Schweißen, das Schneiden oder das Auftragen. Das Verfahren ist wegen der Integration mehrerer Meßverfahren in den Bereich der Bearbeitungsoptik für alle Arten der Prozeß- und der Qualitätsüberwachung besonders für die Anwendungsbereiche Tailored Blanks und Bearbeitung von 3D-Konturen geeignet.

Die Integration der Meßsysteme in den Bereich der Bearbeitungsoptik hat eine Vielzahl von Vorteilen. Insbesondere zu nennen ist ein kompakter Aufbau im Bereich des Bearbeitungskopfes. Für bekannte Verfahren erforderliche Bauteile werden nicht mehr benötigt. Es ergibt sich ein demgemäß verringerter Wartungsaufwand, weil beispielsweise zusätzliche Optiken nicht mehr gereinigt werden müssen. Die Verfahrensabläufe beim Bearbeiten der Werkstücke werden vereinfacht, da weniger bauliche Komponenten bedient werden müssen und die Integration der Meßschritte zu einer Vereinfachung der Auswertung der Meßergebnisse führt. Demgemäß verringern sich die Gesamtkosten für das Verfahren.

Vorteilhafterweise kann das Verfahren so ausgeführt werden, daß die der Prozeßüberwachung dienende Lichtstrahlung und das reflektierte Meßlicht unter Ausnutzung derselben Bearbeitungsoptik gleichachsig oder näherungsweise gleichachsig mit der Lichtstrahlung oder achsparallel dazu detektiert werden. Das vorbeschriebene Detektieren gewährleistet, daß die Bearbeitungsoptik beziehungsweise der Bearbeitungskopf ohne grössere Änderung eingesetzt werden kann, die bei zu großen Winkeln beziehungsweise Schrägsichten durchgeführt werden müßten, beispielsweise eine Locherweiterung bei Einsatz eines Lochspiegels.

Das Verfahren ist insbesondere universell einsetzbar. Es eignet sich für alle Arten optischer Messungen am Werkstück während der Bearbeitung. Das ist deswegen von Bedeutung, weil die Qualitätssicherung bei der Bearbeitung unterschiedlichste Messungen am Werkstück erfordert. Im Hinblick hierauf kann das Verfahren so durchgeführt werden, daß als optische Messung an der Werkstückoberfläche eine Messung des Abstands zwischen der Bearbeitungsoptik und dem Werkstück und/oder eine Vermessung der Werkstückgeometrie vor der Bearbeitungsstelle und/oder eine Vermessung der nach der Bearbeitung vorhandenen Nahtgeometrie und/oder eine Vermessung des an der Bearbeitungsstelle erzeugten Schmelzbades erfolgt. Die Vermessung des Abstands zwischen der Bearbeitungsoptik und dem Werkstück ist beispielsweise in denjenigen Anwendungsfällen erforderlich, in denen das Werkstück Abmessungsänderungen in Laserstrahlrichtung aufweist. Eine Vermessung der Werkstückgeometrie vor der Bearbeitung dient der Erfassung von Geometriefehlern, wie Kantenversatz, Spalte usw. und ermöglicht die Nahtverfolgung. Eine Vermessung der nach der Bearbeitung vorhandenen Nahtgeometrie kann zur Regelung variabler Prozeßgrößen eingesetzt werden, damit eine vorgegebene Nahtqualität eingehalten wird. Eine Vermessung des an der Bearbeitungsstelle erzeugten Schmelzbades liefert Vergleichswerte für einen Vergleich mit Referenzwerten aus Bearbeitungen mit definierten Parametern, so daß bei Abweichungen auf Bearbeitungsfehler geschlossen werden kann. Die vorgenannten optischen Messungen sind keine erschöpfende Aufzählung. Sie erlauben jedoch eine Vereinfachung der industriell bedeutsamsten Verfahren im Sinne der eingangs genannten Aufgabenstellung.

Das Verfahren kann bevorzugt dahingehend durchgeführt werden, daß unterschiedliche Zonen I, II, III des Bearbeitungsbereichs des Werkstücks mit einem einzigen Detektor erfaßt werden. Eine meßtechnische Erfassung unterschiedlicher Zonen des Bearbeitungsbereichs des Werkstücks ermöglicht eine Entzerrung der Meßaufgaben, weil größerräumig gemessen werden kann. Das erleichtert die Steuerung der Bearbeitung. Beispielsweise kann die Werkstückgeometrie mit größerem Abstand zur Bearbeitungsstelle erfaßt werden, so daß Ausgleichsmaßnahmen zum Beispiel durch Steuerung von Werkstücke positionierenden Führungsrollen ergriffen werden können. Es kann an unterschiedlichen Stellen des Bearbeitungsbereichs mit unterschiedlichen Lichtqualitäten gearbeitet werden, beispielsweise mit Licht unterschiedlicher Intensitäten. Dabei sind alle Meßaufgaben mit einem einzigen Detektor zu erfüllen, was eine erhebliche Verfahrensintegration bedeutet.

Das Verfahren kann so durchgeführt werden, daß als erste Zone des Bearbeitungsbereichs der Bereich einer Wechselwirkungszone, als zweite, die erste einschließende Zone der Bereich des Schmelzbades und als dritte Zone der gesamte Bearbeitungsbereich verwendet werden. Die vorgenannten Zonen eines Bearbeitungsbereichs eines Werkstücks weisen typische Lichtstrahlungscharakteristika und Geometrieeigenschaften auf, mit denen die Prozeßsteuerung beeinflußt werden kann. Beispielsweise hat das Schmelzbad für eine bestimmte Bearbeitungsaufgabe eine typische Form und Dynamik, die optisch vermessen werden können, um hieraus auf Prozeßstörungen zu schließen.

Vorteilhaft wird so verfahren, daß die Detektierung unterschiedlicher Zonen des Bearbeitungsbereichs zeitgleich erfolgt. Die gleichzeitige Durchführung aller Meßaufgaben vermeidet Verzögerungen in der Überwachung des Bearbeitungsverfahrens und dessen Steuerung, so daß damit die Fehlerhaftigkeit von Bearbeitungen verringert werden kann.

Das Verfahren kann so durchgeführt werden, daß die der Prozeßüberwachung dienende Lichtstrahlung aus der Wechselwirkungszone stammende Sekundärstrahlung ist und als reflektiertes Meßlicht aus die Wechselwirkungszone umgebenden Bereichen des Bearbeitungsbereichs stammendes Meßlicht verwendet wird. Die Prozeßüberwachung mittels aus der Dampfkapillaren stammenden Sekundärstrahlung ist ein bewährtes Verfahren, bei dem jedoch hohe Lichtintensitäten und hohe Intensitätsschwankungen zu berücksichtigen sind. Um dadurch bedingte Störungen bei der des weiteren und insbesondere gleichzeitig durchzuführenden optischen Messung zu vermeiden, wird als reflektiertes Meßlicht solches verwendet, das aus die Dampfkapillare umgebenden Bereichen des Bearbeitungsbereich stammt. Dabei ist zu bevorzugen, daß das Meßlicht aus der dritten Zone stammt, nämlich aus dem das Schmelzbad umgebenden Anteil des Bearbeitungsbereichs.

Um eine möglichst große Vielzahl von Meßaufgaben in Arbeitsbereich durchführen zu können, kann so verfahren werden, daß die Erfassung des gesamten Bearbeitungsbereichs, nämlich des Meßbereichs, mit einem Detektor ortsauflösend erfolgt. Die Qualität der Ortsauflösung durch den Detektor bestimmt die Vielzahl derjenigen Stellen und die Qualität, mit der gemessen werden kann. Der Detektor kann im Hinblick auf eine Schweißaufgabe jeweils unterschiedlich ausgebildet sein. Im Gegensatz zu mittelwertbildenden Detektoren lassen sich auch veränderliche Prozesse des Bearbeitungsbereichs zuverlässig erfassen, zum Beispiel dynamische Bewegungen im Bereich des Schmelzbads.

Das Verfahren mit einem ortsauflösenden Detektor kann so durchgeführt werden, daß von allen Sensoren des Detektors die Beobachtungsfenster mindestens zweier Zonen des Bearbeitungsbereichs bildende Sensoren zur Auswertung ausgelesen werden. Detektoren mit zeilenweise angeordneten Sensoren eignen sich insbesondere für lineare beziehungsweise ebene Nahtgeometrien. Detektoren mit flächenweise angeordneten Sensoren sind vorzugsweise für dreidimensionale Werkstückgeometrien oder komplizierte Bahnverläufe geeignet.

Wenn Detektoren mit einer großen Anzahl einzelner Sensoren eingesetzt werden, müssen in kurzer Zeit große Datenmengen bearbeitet werden, wenn hohe Ausleseraten für eine ausreichend schnelle Prozeßregelung erforderlich sind, beispielsweise bei on-line Überwachungen. Dadurch können hohe Anforderungen an die Leistungsfähigkeit der Prozeßüberwachungseinrichtung beziehungsweise an die Auswerteeinheiten entstehen. Es ist daher zweckmäßig, die anfallenden Datenmengen zu reduzieren. Zu diesem Zweck wird das Verfahren vorteilhafter Weise so durchgeführt, daß ein zeilenweise oder flächenweise angeordnete Sensoren aufweisender Detektor verwendet wird. Beispielsweise wird ein auf die Dampfkapillare gerichtetes Beobachtungsfenster und ein auf die fertiggestellte Naht gerichtetes Beobachtungsfenster eingerichtet. Die Daten dieser Fenster können schnell getaktet ausgewertet werden, so daß auch schnelle Prozeßabläufe zuverlässig analysiert werden können.

Das vorbeschriebene Verfahren kann dahingehend weitergebildet werden, daß Beobachtungsfenster in Abhängigkeit von Detektordaten in Positionierung und Größe abgeändert und/oder daß Ergebnisse optischer Messungen in Abhängigkeit von Auswertungsdaten des Detektors zeitweise nicht ausgewertet werden. Beispielsweise kann ein Fenster zur Ermittlung der Nahtfolge beziehungsweise der Nahtvermessung mit dem Lichtschnittverfahren auf einige Bildpunkte um die Naht herum beschränkt werden. Ändert sich in diesem Beispiel die Lage der Naht, zum Beispiel auf Grund eines Positionierungsfehlers oder eines ungeraden Bahnverlaufs, so kann mit dem analysierten Nahtbild des Fensters bestimmt werden, wie das Fenster verschoben oder vergrößert werden muß, um die Naht weiterhin verfolgen oder vermessen zu können. Datenmengen können auch dadurch reduziert werden, daß Ergebnisse zeitgleicher Messungen nicht ausgewertet werden. Es ist beispielsweise nicht notwendig, eine Abstandsmessung, eine Vermessung der Werkstückgeometrie, eine Vermessung der Nahtgeometrie oder eine Vermessung des Schmelzbades durchzuführen, solange die Prozeßüberwachung keine Fehler feststellt. Eine oder mehrere der vorgenannten Messungen beziehungsweise Vermessungen werden erst dann durchgeführt, wenn die Prozeßüberwachung Fehler feststellt.

Die Erfindung bezieht sich auch auf eine Vorrichtung mit den Merkmalen des Oberbegriffs des Anspruchs 12. Diese Vorrichtung ist ebenfalls den oben genannten Kritikpunkten des in Bezug genommenen Verfahrens offen und die oben genannte Aufgabe wird durch die im Kennzeichenteil des Anspruchs 12 genannten Merkmale gelöst.

Für die vorgenannte Vorrichtung ergibt sich als wesentlicher Vorteil der kompakte Aufbau im Bereich des Bearbeitungskopfes. Die Vorrichtung kann auch geometrisch komplizierte Bearbeitungsaufgaben durchführen, ohne daß sich extern angeordnete Meßlichtaufnehmer störend auswirken. Einzelmeßsysteme können zumindest meßseitig vollkommen in den Bearbeitungskopf integriert werden. Meßergebnisse lassen sich mit einer reduzierten Anzahl von Detektoren beziehungsweise Sensoren erreichen, die sämtlich dieselbe Bearbeitungsoptik verwenden. Eine weitere wesentliche Verbesserung der Vorrichtung ergibt sich dabei, daß die Meßlichtquelle innerhalb eines die Bearbeitungsoptik aufweisenden Bearbeitungskopfes oder an dem Bearbeitungskopf untergebracht ist. Hierbei erfolgt eine Vollintegration der gesamten oder einer platzsparenden Anordnung der Meßlichtführung.

Vorteilhafterweise kann die Vorrichtung so ausgebildet werden, daß das Meßlicht in der vorbestimmten optischen Achse der vom Werkstück ausgehenden Lichtstrahlung oder näherungsweise gleichachsig oder parallel dazu mit derselben Bearbeitungsoptik erfaßbar ist. Messungen können vorzugsweise in der optischen Achse der vom Werkstück ausgehenden Lichtstrahlung erfolgen, oder parallel zu dieser optischen Achse. Die optische Achse selbst kann auch mit der Achse der Hochenergieoder Laserstrahlung zusammenfallen. Es kann sich eine erhebliche Reduktion der Gesamtkosten der Vorrichtung ergeben.

Es ist zweckmäßig, die Vorrichtung so auszubilden, daß ein einziger, zur bedarfsweise ortsauflösenden Beobachtung unterschiedlicher Zonen des Bearbeitungsbereichs des Werkstücks geeigneter Detektor vorhanden ist. Der Einsatz eines einzigen Detektors trägt wesentlich dazu bei, den mechanischen Aufbau der Vorrichtung zu vereinfachen. Insbesondere wird auch eine einfache Nachrüstung in bereits bestehende Anlagen erleichtert. Dabei kann der Detektor den jeweiligen Beobachtungsaufgaben angepaßt werden, beispielsweise durch ortsauflösende Beobachtungseigenschaften, die an unterschiedliche Zonen des Bearbeitungsbereichs des Werkstücks angepaßt sind.

Um bewährte Bauformen von Bearbeitungsköpfen einsetzen zu können, wird die Vorrichtung so ausgebildet, daß im Strahlengang der Hochenergie- oder Laserstrahlung ein das Meßlicht und/oder die Lichtstrahlung auskoppelndes Bauteil angeordnet ist. Solche Bauteile sind beispielsweise dichroitische Spiegel, die entweder die Laserstrahlung reflektieren oder durchlassen. Es kommen auch fokussierende Lochspiegel, Scraperspiegel oder Auskoppelprismen in Frage. Ihr Einsatz bestimmt sich beispielsweise entsprechend der Strahlungsintensität der Laserstrahlung oder der Strahlqualität entsprechend.

Die oben beschriebene Vollintegration kann dahingehend besonders erfolgen, daß die Meßlichtquelle mit dem auskoppelnden Bauteil zusammengebaut oder mit Abstand davor oder dahinter angeordnet ist. Infolgedessen ist der Bereich der Bearbeitungsoptik frei von Einbauten und die Meßlichtquelle ist zumindest in demselben Maße geschützt, wie die in den Bearbeitungskopf eingebaute Bearbeitungsoptik.

Eine vorteilhafte Weiterbildung der Vorrichtung zeichnet sich dadurch aus, daß das Meßlicht der Meßlichtquelle im Winkel zu der vorbestimmten optischen Achse auf das Werkstück projiziert ist. Die optische Messung kann dann mit der Triangulation erfolgen. Für die Triangulation mit dem Lichtschnittverfahren ist es erforderlich, daß zwischen der Einfallsrichtung des Meßlichtstrahls auf das Werkstück und der vorbestimmten Achse der Bearbeitungsoptik ein Winkel größer als 0 und kleiner als 90 Winkelgrad besteht. Diese Bedingung wird durch die vorbeschriebene Gestaltung der Vorrichtung erfüllt.

In besonderer Weise wird die Vorrichtung dahingehend ausgebildet, daß das Meßlicht der Meßlichtquelle kegel- oder trichtermantelartig und/oder abschnittsweise geradlinig auf das Werkstück projiziert ist. Die kegelmantelartige Projektion des Meßlichts läßt sich mit einem oder mehreren Lichterzeugern bewirken, die den räumlichen Gegebenheiten des Bearbeitungskopfs entsprechend in diesem angeordnet sein können. Das ist auch bei abschnittsweiser geradliniger Projektion des Meßlichts möglich, wenn mehrere Lichterzeuger geradlinige Lichtlinienabschnitte erzeugen, die so auf dem Werkstück angeordnet werden, daß sich eine gewünschte Lichtlinie auf dem Werkstück ergibt. Beispielsweise kann eine Kreislinie durch einzelne Geradenstücke angenähert werden.

Es ist ein grundsätzliches Problem, das Prozeßleuchten zugleich im Sinne mehrere Überwachungen zu analysieren. Hierbei ergibt sich insbesondere das Problem, Meßlicht einer optischen Messung von solcher Lichtstrahlung zu unterscheiden, die beispielsweise als Sekundärstrahlung aus der Bearbeitungsstelle des Werkstücks herrührt. Um eine derartige Beeinträchtigung zu vermeiden, wird die Vorrichtung so ausgebildet, daß das Meßlicht der Meßlichtquelle bei einer festen Frequenz amplitudenmoduliert ist. Die Modulationsfrequenz muß dabei kleiner sein, als die halbe Abtastrate des verwendeten Detektors. Die Detektorsignale können mittels bekannter Methoden der Signalverarbeitung frequenzselektiv für die Modulationsfrequenz ausgewertet werden, zum Beispiel mittels schneller Fourier-Transformation. Die Vorrichtung kann die Sicherheit bei der Erkennung des Meßlichtschlitzes infolge einer Verbesserung des Signal-Rausch-Abstandes erhöhen.

Es kann eine weitere Ausgestaltung der Vorrichtung dahingehend erfolgen, daß das Meßlicht der Meßlichtquelle an unterschiedlichen Beobachtungsstellen des Werkstücks zeitlich nacheinander mit hoher Frequenz wiederholt anwendbar ist. Insbesondere kann dabei eine Kreisform oder eine andere gewünschte Form bei der Meßlichtlinie auf dem Werkstück durch aneinandergereihte Lichtpunkte oder Linienabschnitte erzeugt werden, wenn diese mit ausreichend hoher Geschwindigkeit nacheinander auf der vorbestimmten Lichtbahn zu erzeugen sind. Dazu kann beispielsweise die Meßlichtquelle selbst rotieren oder es erfolgt eine Ablenkung des Meßlichts über rotierende Spiegel, insbesondere im Falle einer kreisförmigen Ablenkung.

Das Problem der Störung der optischen Messung durch das Prozeßleuchten kann aber auch durch eine Ausgestaltung der Vorrichtung gelöst werden, bei der der Detektor einen sich über mehrere Dekaden von Licht- oder Strahlungsintensitäten erstreckenden Dynamikbereich aufweist. Ein derartiger Detektor kann beispielsweise von einer CMOS-Kamera gebildet sein.

Das vorbeschriebene Problem kann auch durch eine Ausbildung der Vorrichtung gelöst werden, bei der dem Detektor ein optisches Filtersystem vorgeordnet ist, das Beobachtungszonen des Bearbeitungsbereichs begrenzende Eigenschaften besitzt. Derartige Filtersysteme sind mit Spezialfiltern bestückt, deren Filtercharakteristik an die hier zu erfüllenden Funktionen der Abgrenzung von Beobachtungszonen angepaßt ist. In Frage kommen reine Abschwächungsfilter oder wellenlängenselektive Filter.

Die Erfindung wird anhand von in der Zeichnung dargestellten Ausführungsbeispielen erläutert. Es zeigt:
- Fig.1 bis 3: schematische Darstellungen von werkstückbearbeitenden Vorrichtungen,
- Fig.4a, 4b: Aufsichten auf Bearbeitungsbereiche eines Werkstücks,
- Fig.5a bis 5f: schematische Darstellungen zur Erläuterung der Anordnung und Wirkung von Meßlichtquellen, und
- Fig.6a, 6b: schematische Darstellungen zur Erläuterung von selektiven Filtern.

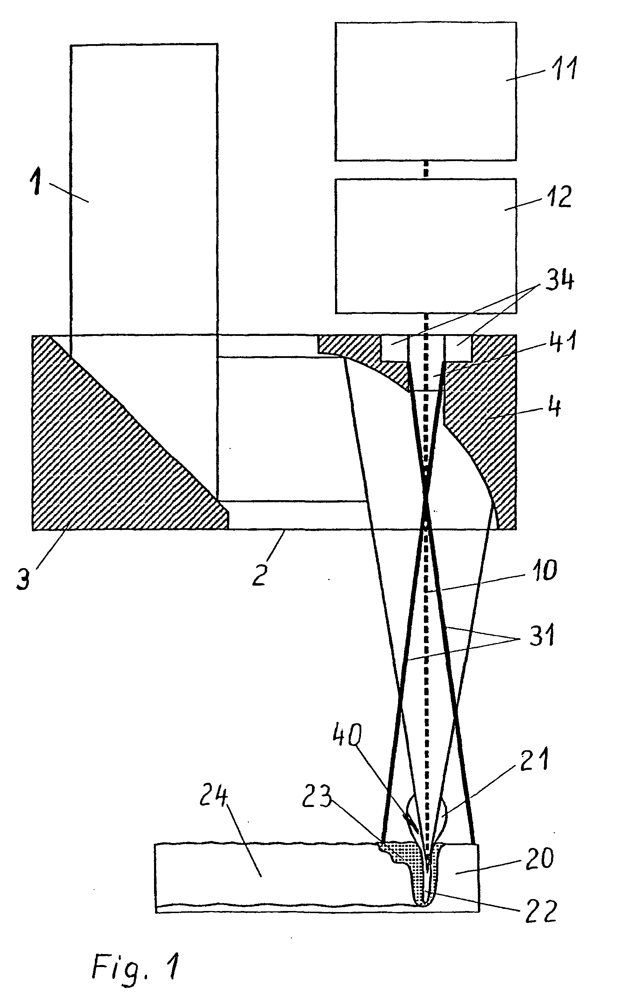

Fig.1 zeigt als Rechteck ein Gehäuse 2 einer aus einem Umlenkspiegel 3 und einem Lochspiegel 4 bestehenden Bearbeitungsoptik, mit der Laserstrahlung 1 auf ein Werkstück 20 projiziert wird, wobei der Lochspiegel 4 eine Fokussierung der Laserstrahlung auf eine Bearbeitungsstelle 40 eines Werkstücks 20 vornimmt. Die Laserstrahlung 1 ist derart energiereich, daß sich an der Bearbeitungsstelle 40 eine Dampfkapillare 22 im Werkstück 20 ausbildet, die zur Verdampfung von Werkstoff mit anschließender Ausbildung eines Plasmas 21 führt. Die Ausbildung einer Dampfkapillaren 22 an der Bearbeitungsstelle 40, also im Bereich der Wechselwirkungszone, in der die Energie der Laserstrahlung 1 in das Werkstück 20 eingekoppelt wird, ist nicht generell notwendig. Es kann auch ein Bearbeitungsverfahren durchgeführt werden, bei dem die Plasmabildungsschwelle nicht überschritten wird. Das Werkstück 20 ist relativ zur Laserstrahlung 1 bewegt, so daß sich bei dem dargestellten Schweißvorgang eine Schweißnaht 24 ausbildet. Ein die Dampfkapillare 22 umgebender Bereich des aufgeschmolzenen Werkstücks 20 ist flüssig und als Schmelzbad 23 dargestellt.

Infolge der Erwärmung des Werkstücks 20 entsteht Wärmestrahlung, die als sekundäre Lichtstrahlung in den Bereich der Bearbeitungsoptik gelangt. Die Achse dieser Lichtstrahlung ist mit 10 gekennzeichnet. Sie ist durch das im Lochspiegel 4 vorhandene Loch 41 vorbestimmt. Da der Spiegel 4 massiv ausgebildet ist, beispielsweise als massiver Kupferspiegel zur Reflektion intensiver Laserstrahlung eines CO₂-Lasers, ist das Loch 41 zylindrisch und beeinflußt mit seiner Ausrichtung auf die Bearbeitungsstelle 40 die Anordnung der Achse 10. Entsprechend dieser Achse gelangt die sekundäre Lichtstrahlung durch ein optisches System 12 zu einem Detektor 11.

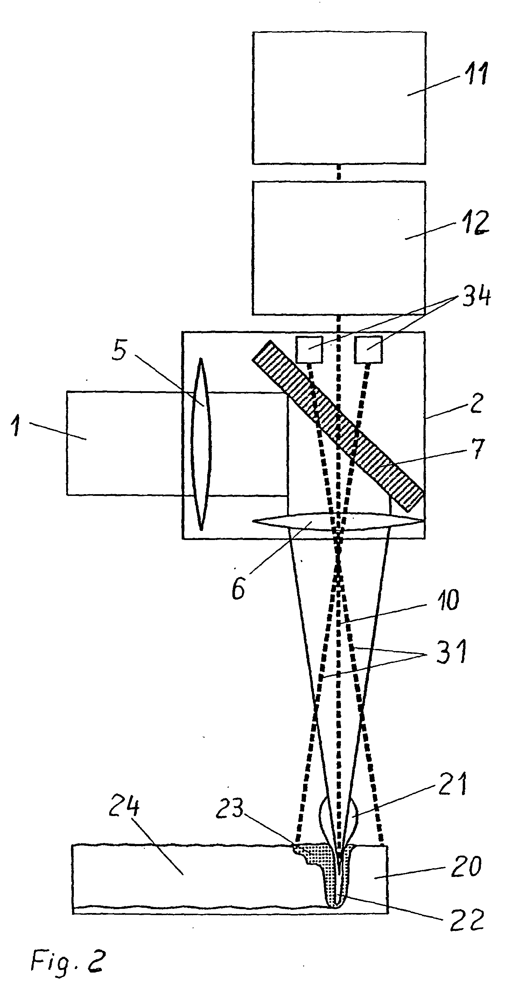

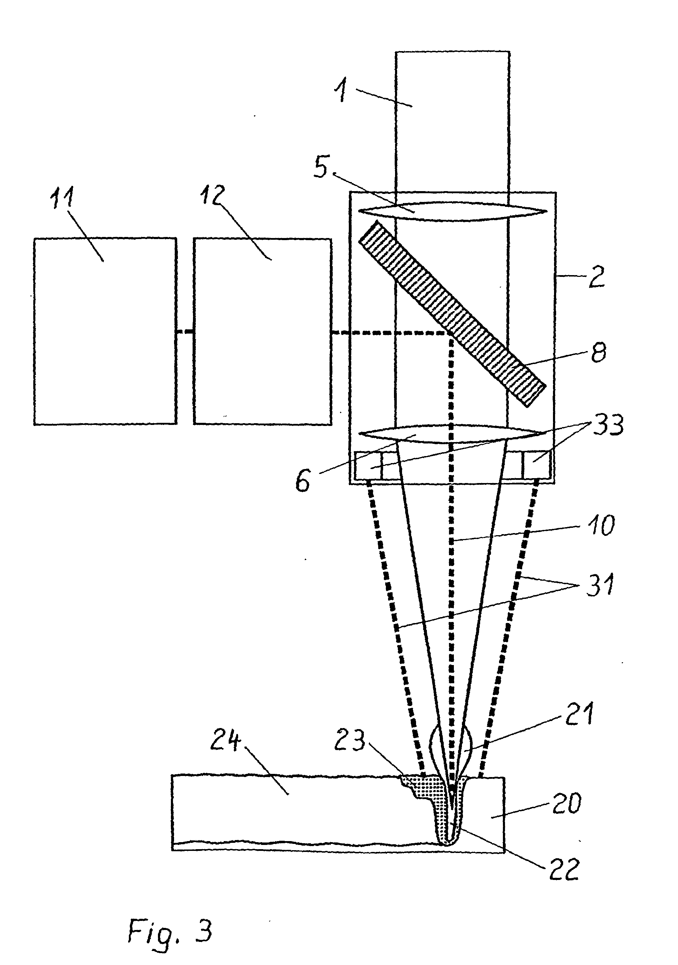

In den Fig.2, 3 ist innerhalb des Gehäuses 2 eine Bearbeitungsoptik untergebracht, die aus einer Kollimationslinse 5 und aus einer in Richtung der Laserstrahlung 1 nachgeordneten Fokussierlinse 6 besteht. Zwischen den beiden Linsen 5, 6 befindet sich ein dichroitischer Spiegel 7, 8, der für Licht unterschiedlicher Wellenlängen unterschiedliche Transmissions- beziehungsweise Reflektionseigenschaften hat. Dichroitische Spiegel sind insbesondere für die Werkstückbearbeitung mit Nd:YAG-Lasern geeignet. Der dichroitische Spiegel 7 gem. Fig.2 reflektiert die Laserstrahlung 1, ist aber durchlässig für vom Werkstück 20 herrührende Lichtstrahlung. Demgemäß sind die Linsen 5, 6 darstellungsgemäß im Winkel angeordnet, so daß die horizontal zugestrahlte Laserstrahlung 1 im rechten Winkel zur Fokussierlinse 6 umgelenkt und von dieser auf das Werkstück 20 fokussiert wird. In Abweichung dazu ist der dichroitische Spiegel 8 der Fig.3 für die Laserstrahlung 1 durchlässig. Die Linsen 5, 6 sind daher in Strahlungsrichtung der Strahlung 1 unter Einschluß des Spiegels 8 hintereinander angeordnet. Er reflektiert jedoch die vom Werkstück 20 herrührende sekundäre Lichtstrahlung, so daß die optische Achse 10 gemäß der Anordnung des Spiegels 8 abgewinkelt wird. Entsprechend diesem optischen Verhalten der Spiegel 7, 8 sind das optische System 12 und der Detektor in Fig.2 oberhalb des Gehäuses 2 und in Fig.3 links neben dem Gehäuse 2 angeordnet.

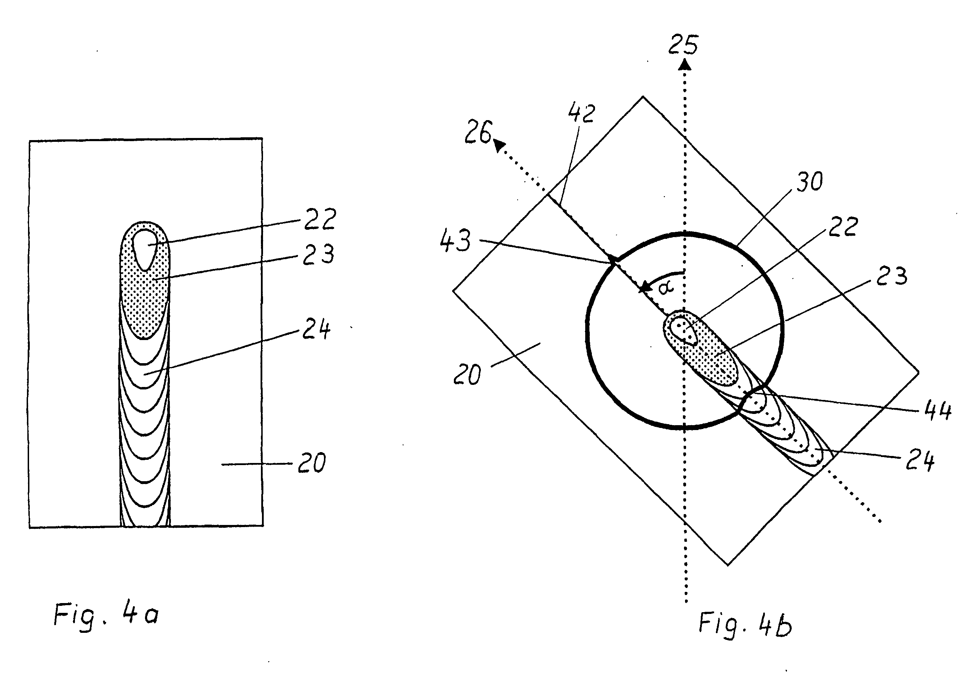

Die Fig.4a, 4b zeigen den Bearbeitungsbereich des Werkstücks 20 in Richtung der Laserstrahlung 1, jedoch ohne die Bearbeitungsoptik. Eine fertiggestellte Schweißnaht 24 schließt sich an das Schmelzbad 23 an, in dem sich die Dampfkapillare 22 befindet. Da sich in der Dampfkapillare 22, dem Schmelzbad 23 und der fertiggestellten Schweißnaht 24 unterschiedliche Prozesse abspielen beziehungsweise Zustände vorhanden sind, ist es zweckmäßig, dementsprechend unterschiedliche Zonen zu definieren. Als erste Zone I des Bearbeitungsbereichs wird der Bereich der Dampfkapillaren 22 angesehen. Als zweite Zone II wird der die erste Zone I umgebende Bereich des Schmelzbades angesehen und als dritte Zone III ist der Bereich der Schweißnaht 24 sowie der die Zonen I, II und die Schweißnaht 24 umgebende bzw. begrenzende Bearbeitungsbereich anzusehen. In der Praxis kann der Bearbeitungsbereich eine Kantenlänge von einigen Zentimetern haben.

Der Bearbeitungsbereich wird von einem einzigen Detektor beobachtet, der sich in Strahlungsaufnahmerichtung gem. Fig.1 bis 3 hinter dem optischen System 12 befindet. Derartige Detektoren haben zeilenweise oder flächenmäßig angeordnete Sensoren, die an mehreren Bildpunkten detektieren.

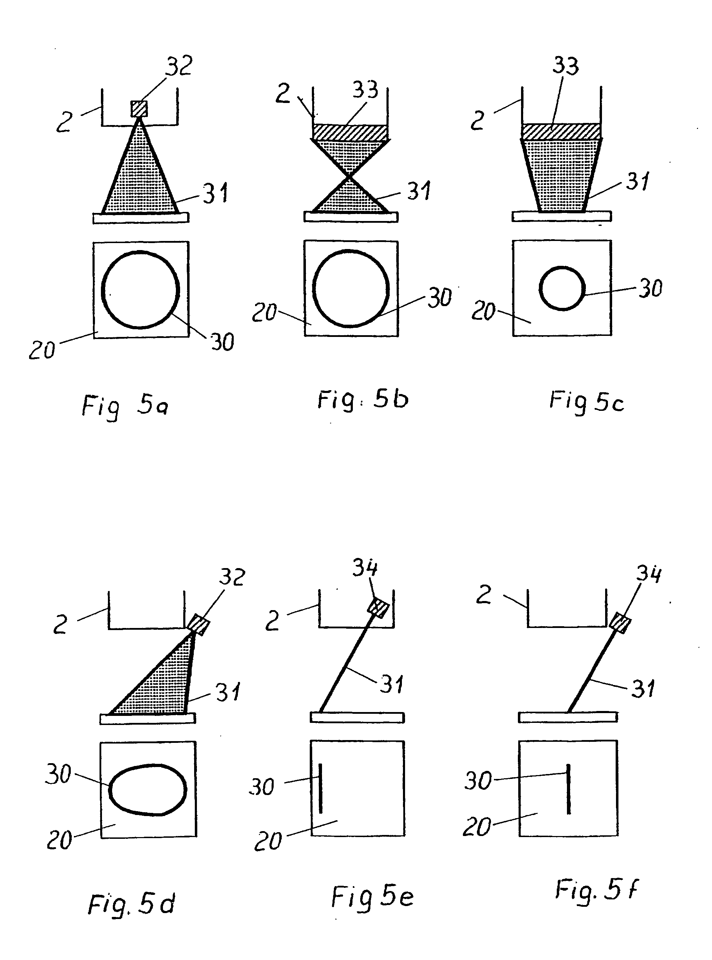

Zeilen- oder Flächensensoren werden vorzugsweise zur ortsaufgelösten Beobachtung eingesetzt. Die Strahlung, die auf einen oder mehrere Bildpunkte fällt, wird der Sensorenanordnung entsprechend unterschiedlich ausgewertet und unterschiedlichen Stellen des Bearbeitungsbereichs zugeordnet. Es können also Sensoren zur Beobachtung der Zone I, andere Sensoren zur Beobachtung der Zone II und dritte Sensoren desselben Detektors zur Beobachtung der Zone III verwendet werden. Einzelne dieser Sensoren können Fenster bilden, die nur einem Teilbereich einer Zone zugeordnet sind. Insbesondere erfolgt eine Zuordnung eines Teils der Sensoren des Detektors 11 zur Beobachtung der Zone I zwecks Erfassung von Prozeßüberwachung dienender Lichtstrahlung, nämlich der aus der Dampfkapillaren 22 herrührenden Sekundärlichtstrahlung. Desweiteren ist mindestens eine weitere Gruppe von Sensoren zu einer Erfassung von Meßlicht bestimmt, das im Rahmen einer optischen Messung vom Bearbeitungsbereich reflektiert wird. Fig.4b zeigt insoweit die Abbildung einer Lichtlinie 30 auf dem Werkstück 20 wobei die Lichtlinie in Form eines Kreises projiziert ist. Der Kreismittelpunkt fällt mit der Dampfkapillaren 20 zusammen beziehungsweise ist durch die Positionierung der optischen Achse 10 definiert. Mit Hilfe der Linie 30 kann die Werkstückgeometrie vor der Bearbeitungsstelle 40 und im Bereich der fertiggestellten Naht 24 erfolgen. In Fig. 4b ist zur Erläuterung eine Fügelinie 42 dargestellt, die durch zwei stumpf zusammenstoßende Werkstückteile gebildet ist. Wenn diese Werkstückteile nicht vollständig dicht aneinanderliegen ist eine Vertiefung vorhanden und es ist eine Ausfransung 43 der Lichtlinie 30 zu sehen, weil das Licht nicht vertikal zur Darstellungsebene auf das Werkstück 20 projiziert ist, sondern beispielsweise gem. Fig.5a in einem Winkel zur optischen Achse 10. Der in Fig.4b außenliegenden Ausfransung 43 liegt im Bereich der Schweißnaht 24 eine zentral gerichtete Auskehlung 44 der kreisförmigen Lichtlinie gegenüber, weil die Schweißnaht über das Niveau des Werkstücks 20 erhöht ist. Unterschiedliche Nahtgeometrien führen also zu unterschiedlichen Lichtverläufen, beispielsweise bei Kerben, Nahtüberhöhungen, Nahtunterwölbungen oder Löchern. Entsprechend lassen sich bei einer Vermessung der Werkstückgeometrie vor der Bearbeitungsstelle 40 zum Beispiel Kantenversätze oder Spaltbildungen nachweisen.

In Fig.4b ist des weiteren veranschaulicht, daß die Ausrichtung 26 des Werkstücks 20 und die Ausrichtung 25 des Detektors 11 nicht übereinstimmen müssen, sondern einen Winkel α aufweisen können. Trotzdem ist es insbesondere beim Einsatz eines Detektors mit flächenweise angeordneten Sensoren möglich, korrekt zu messen, weil die unterschiedlichen Ausrichtungen 25, 26 des Detektors 11 und des Werkstücks 20 bekannt sind und demgemäß bei der Auswertung des Detektors rechnerisch berücksichtigt werden können.

Die auf dem Werkstück 20 abgebildete Lichtlinie 30 wird durch geeignete Projektion mit einer Meßlichtquelle 32 bis 34 erzeugt. Die Projektion ist derart, daß sie optische Messungen mit der Methode der Triangulation zum Beispiel im Lichtschnittverfahren durchgeführt werden kann. Die Durchführung der Triangulation erfordert es, daß zwischen der Einfallsrichtung des Meßlichtstrahls 31 auf das Werkstück 20 und der vorbestimmten optischen Achse 10 ein Winkel von weniger als 90 Winkelgrad besteht. Soll eine kreisförmige Linie 30 auf dem Werkstück 20 erreicht werden, so kann dies gemäß Fig.5a mit einer punktförmigen Meßlichtquelle 32 geschehen, die ihren Meßlichtstrahl 31 kegelmantelartig projiziert. Das kann beispielsweise dadurch realisiert werden, daß die Meßlichtquelle 32 den Meßlichtstrahl 31 konzentrisch zur Achse 10 durch einen dichroitischen Spiegel hindurch projiziert.

Auch die Fig.5b, 5c zeigen Ausgestaltungen von Meßlichtquellen 33 die kreisförmige Lichtlinien 30 auf das Werkstück 20 projizieren. Die Meßlichtquellen 33 können beispielsweise Ringleuchten sein oder aus mehreren, ringartig angeordneten Punkt- oder Strichlichterzeugern bestehen, von denen aus der Meßlichtstrahl 31 in dargestellter Weise doppelkegelförmig oder trichtermantelartig projiziert wird, also mit sich verringernden Kreisdurchmesser.

Die Fig.5d bis f zeigen, daß die Meßlichtlinie 30 auf dem Werkstück nicht zwangsweise kreisförmig sein muß. Fig.5d zeigt eine ellipsenartig ausgebildete Linie 30, erzeugt von einer Meßlichtquelle 32, die neben dem Gehäuse 2 der Bearbeitungsoptik angeordnet ist. In diesem Fall erfolgt also die Zustrahlung des Meßlichts nicht aus dem Bereich der Bearbeitungsoptik 2 heraus, wohl aber erfolgt die Aufnahme des vom Werkstück 20 reflektierten Meßlichts unter Ausnutzung der Bearbeitungsoptik. Mit Hilfe der Meßlichtquellen 34 werden Linienstücke auf das Werkstück 20 projiziert. Derartige gerade Linien beziehungsweise Linienstücke sind dann ausreichend, wenn nur begrenzte Teile oder Fenster des Bearbeitungsbereichs überwacht werden sollen, zum Beispiel quer zur Fügelinie 42 und/oder zur fertiggestellten Schweißnaht 24. Fehlerhafte Fügelinien 42 oder Schweißnähte 24 bewirken eine Reflektion des Meßlichts, die von der Idealform abweicht, also von der Kreisförmigkeit oder Linienförmigkeit. Bei der Projektion eines Kreises oder einer Ellipse mit bekannten Projektionswinkeln kann durch die Bestimmung von Durchmessern der Linien auf dem Werkstück 20 berechnet werden, wie groß der Abstand zwischen dem Werkstück 20 und der Bearbeitungsoptik ist.

Die Fig.5e, 5f zeigen, daß auch die Meßlichtquellen 34 innerhalb des Gehäuses 2 im Bereich der Bearbeitungsoptik angeordnet sein können, oder außerhalb dieses Gehäuses. Für die Anordnung von Meßlichtquellen innerhalb des Gehäuses 2 zeigen die Fig.1 bis 3 Ausführungsbeispiele. Fig.1 zeigt zwei Meßlichtquellen 34 zur Erzeugung von Lichtlinien auf dem Werkstück 20. Eine fügenahtseitige Meßlichtquelle 34 projiziert den zugehörigen Meßlichtstrahl 31 in die Zone II, also in den Bereich des Schmelzbades. Eine schweißnahtseitig angeordnete Meßlichtquelle 34 projiziert einen Meßlichtstrahl 31 durch das Loch 41 auf den Bereich der Fügelinie 42. Reflektiertes Meßlicht beider Meßlichtstrahlen 31 kann durch das Loch 41 gleichachsig mit der Sekundärlichtstrahlung aus der Zone I oder parallel zu dieser Achse 10 in den Bereich des Detektors gelangen. So daß eine optische Messung an zwei unterschiedlichen Stellen erfolgt, zusätzlich zur Messung der Lichtstrahlung aus dem Bereich der Zone I. Dabei sind die Meßlichtquellen 34 vor der Laserstrahlung 1 geschützt und hinter dem Lochspiegel 4 angeordnet.

Gemäß Fig.2 sind zwei Meßlichtquellen 34 vorhanden, die in ähnlicher Geometrie angeordnet sind, wie die Meßlichtquellen 34 der Fig.1. Das von ihnen projizierte Meßlicht entsprechend dem Meßlichtstrahlen 31 durchdringt den dichroitischen Spiegel 7 und erzeugt Meßstellen in den Bereichen der Zonen II, III, von denen aus reflektiertes Meßlicht durch den dichroitischen Spiegel 7 zurück in den Detektor 11 gelangt.

In Fig.3 ist die Anordnung einer Meßlichtquelle 34 dargestellt, die innerhalb des Gehäuses 2 zwischen der Fokussierlinse 6 und dem Werkstück 20 angeordnet ist. Ihre Meßlichtstrahlen 31 sind trichtermantelartig ausgebildet, da sie ringförmiges Licht erzeugt. Die Anordnung der Meßlichtquelle 33 in Laserstrahlungsrichtung vor dem Spiegel 8 beziehungsweise vor der Linse 6 gestattet eine größere Freizügigkeit im Bereich der Bearbeitungsoptik und vor allem bei der Wahl der Form des Meßlichtstrahls. Diese Form wiederum gestattet es, außer einer Abstandsmessung zugleich eine Vermessung der Werkstückgeometrie und der Geometrie des Schmelzbades 23 zusätzlich zu der Prozeßüberwachung durchzuführen.

Die Auswertung der Meßlichtstrahlung mit Hilfe des oben beschriebenen einzigen Detektors 11, der zum Beispiel als CCD-Kamera ausgebildet sein kann, erfolgt den Auswertungsbedürfnissen entsprechend. Beispielsweise kann die Prozeßüberwachung im Bereich der Zone I durch Auswertung emittierter Lichtstrahlung in einem oder in mehreren Punkten erfolgen. Dabei können die zeitlichen Mittelwerte ebenso ausgewertet werden, wie das Zeitverhalten der Amplituden der Bildpunkte oder auch Gruppen von Bildpunkten.

Bei der Prozeßüberwachung können in üblicher Weise alle bekannten Überwachungsverfahren durchgeführt werden, wie die Plasmaüberwachung, die Durchschweißerkennung, die Einschweißtiefenmessung, die Kapillargeometriemessung usw. Bei diesen Prozeßüberwachungen des vom Werkstück ausgehenden Lichts, also der emittierten oder reflektierten Strahlung, treten üblicherweise große Strahlungsintensitäten beziehungsweise Helligkeiten auf. Es ist daher erforderlich, daß dies bei der Erfassung vom Werkstück 20 reflektierten Meßlichts berücksichtigt wird, welches derartige Helligkeiten nicht besitzt. Dem Detektor ist daher das optische System 12 vorgeschaltet, das aus Filtern oder Linsen besteht, mit denen eine Trennung des aus der Zone I herrührenden Lichts von dem der Zone II, III erfolgen kann, sofern nicht Detektoren mit einem hohen Dynamikbereich eingesetzt werden, die einer derartigen Trennung nicht bedürfen.

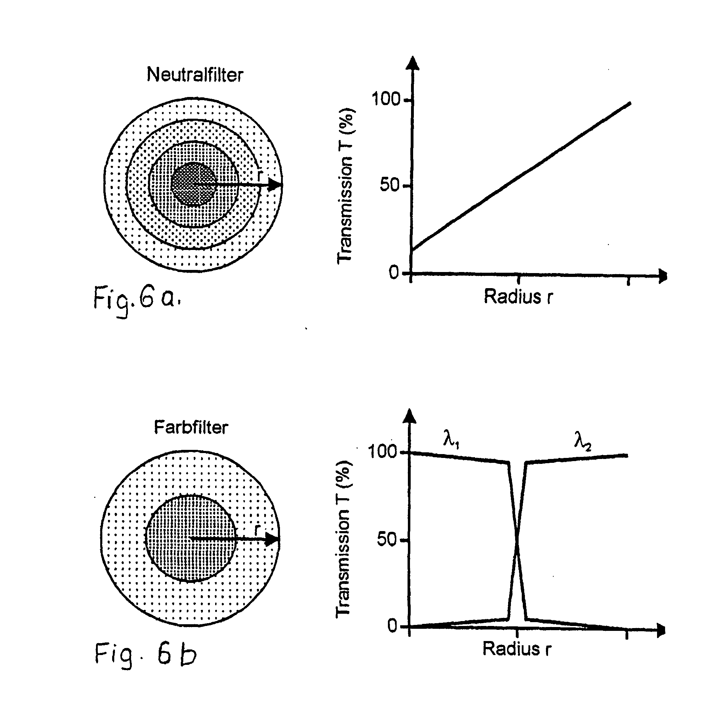

Die Fig.6a, 6b zeigen Spezialfilter mit Filtercharakteristiken in Abhängigkeit vom Filterradius r. In Fig.6a ist ein Neutralfilter dargestellt, der als Abschwächungsfilter dargestellt ist. Seine Transmissionsrate steigt von innen nach außen. Er läßt also nahe dem Radiusmittelpunkt nur wenig Licht durch, schirmt also die aus der Zone I herrührende helle Lichtstrahlung ab. Während große Radien eine größere beziehungsweise 100 %ige Transmissionsrate haben, so daß auch vergleichsweise dunkles Meßlicht erfaßt werden kann. In Fig.6b ist ein Farbfilter dargestellt, dessen Transmissionsrate für unterschiedliche Wellenlängen des Lichts unterschiedlich groß ist. So läßt der Filter bei kleinen Radien nur Licht der Wellenlänge λ1 durch, während er bei größeren Radien nur Licht der Wellenlänge λ2 durchläßt. Demgemäß kann als Meßlicht Licht der Wellenlänge λ2 eingesetzt werden, die von der Wellenlänge λ2 des Lichts aus der Zone II unterschiedlich ist, so daß sich die unterschiedlichen Lichtqualitäten bei der Auswertung der Messung auch bei zeitgleicher Auswertung nicht stören.

## Patentansprüche

1. Verfahren zum Bearbeiten von Werkstücken (20) mit Hochenergiestrahlung, insbesondere mit Laserstrahlung (1), bei dem die Strahlung (1) von einer Bearbeitungsoptik auf eine Bearbeitungsstelle (40) fokussiert wird, bei dem vom Werkstück (20) ausgehende aus sekundärer Prozeßund Wärmestrahlung bestehende Lichtstrahlung unter Nutzung der Bearbeitungsoptik aufgenommen und mit einem Detektor (11) einer Prozeßüberwachungseinrichtung ausgewertet wird, und bei dem in einem Bearbeitungsbereich des Werkstücks (20) mit einer Fremdmeßlichtquelle (32 bis 34) eine optische Messung an der Werkstückoberfläche unter Ausnutzung aus dem Bearbeitungsbereich reflektierten Meßlichts erfolgt, **dadurch gekennzeichnet, daß** die der Prozeßüberwachung dienende Lichtstrahlung und das reflektierte Meßlicht unter Ausnutzung derselben Bearbeitungsoptik detektiert werden.

2. Verfahren nach Anspruch 1, **dadurch gekennzeichnet, daß** die der Prozeßüberwachung dienende Lichtstrahlung und das reflektierte Meßlicht unter Ausnutzung derselben Bearbeitungsoptik gleichachsig oder näherungsweise gleichachsig mit der Lichtstrahlung oder achsparallel dazu detektiert werden.

3. Verfahren nach Anspruch 1 oder 2, **dadurch gekennzeichnet, daß** als optische Messung an der Werkstückoberfläche eine Messung des Abstands zwischen der Bearbeitungsoptik und dem Werkstück (20) und/oder eine Vermessung der Werkstückgeometrie vor der Bearbeitungsstelle (40) und/oder eine Vermessung der nach der Bearbeitung vorhandenen Nahtgeometrie und/oder eine Vermessung des an der Bearbeitungsstelle (40) erzeugten Schmelzbades (23) erfolgt.

4. Verfahren nach einem oder mehreren der Ansprüche 1 bis 3, **dadurch gekennzeichnet, daß** unterschiedliche Zonen (I, II, III) des Bearbeitungsbereichs des Werkstücks (20) mit einem einzigen Detektor (11) erfaßt werden.

5. Verfahren nach einem oder mehreren der Ansprüche 1 bis 4, **dadurch gekennzeichnet, daß** als erste Zone (I) des Bearbeitungsbereichs der Bereich einer Wechselwirkungszone (22), als zweite, die erste einschließende Zone (II) der Bereich des Schmelzbades (23) und als dritte Zone (III) der gesamte Bearbeitungsbereich verwendet werden.

6. Verfahren nach einem oder mehreren der Ansprüche 1 bis 5, **dadurch gekennzeichnet, daß** die Detektierung unterschiedlicher Zonen (I bis III) des Bearbeitungsbereichs zeitgleich erfolgt.

7. Verfahren nach einem oder mehreren der Ansprüche 1 bis 6, **dadurch gekennzeichnet, daß** die der Prozeßüberwachung dienende Lichtstrahlung aus der Wechselwirkungszone (22) stammende Sekundärstrahlung ist und als reflektiertes Meßlicht aus die Wechselwirkungszone (22) umgebenden Bereichen des Bearbeitungsbereichs stammendes Meßlicht verwendet wird.

8. Verfahren nach einem oder mehreren der Ansprüche 1 bis 7, **dadurch gekennzeichnet, daß** die Erfassung des gesamten Bearbeitungsbereichs mit einem Detektor (11) ortsauflösend erfolgt.

9. Verfahren nach einem oder mehreren der Ansprüche 1 bis 8, **dadurch gekennzeichnet, daß** ein zeilenweise oder flächenweise angeordnete Sensoren aufweisender Detektor (11) verwendet wird.

10. Verfahren nach einem oder mehreren der Ansprüche 1 bis 9, **dadurch gekennzeichnet, daß** von allen Sensoren des Detektors (11) die Beobachtungsfenster mindestens zweier Zonen (I, II oder III) des Bearbeitungsbereichs bildende Sensoren zur Auswertung ausgelesen werden.

11. Verfahren nach einem oder mehreren der Ansprüche 1 bis 10, **dadurch gekennzeichnet, daß** Beobachtungsfenster in Abhängigkeit von Detektordaten in Positionierung und Größe abgeändert werden und/oder daß Ergebnisse optischer Messungen in Abhängigkeit von Auswertungsdaten des Detektors (11) zeitweise nicht ausgewertet werden.

12. Vorrichtung zum Bearbeiten von Werkstücken (20) mit Hochenergiestrahlung, insbesondere mit Laserstrahlung (1), mit einer die Strahlung (1) auf eine Bearbeitungsstelle (40) fokussierenden Bearbeitungsoptik, die vom Werkstück (20) ausgehende aus sekundärer Prozeß- und Wärmestrahlung bestehende Lichtstrahlung für einen Detektor (11) einer Prozeßüberwachungseinrichtung mit vorbestimmter optischer Achse erfaßt, und mit einer Fremdmeßlichtquelle (32 bis 34), deren aus einem Bearbeitungsbereich des Werkstücks (40) reflektiertes Meßlicht einer optischen Messung an der Werkstückoberfläche dient, insbesondere zur Durchführung eines Verfahrens der Ansprüche 1 bis 11, **dadurch gekennzeichnet, daß** das Meßlicht mit derselben Bearbeitungsoptik erfaßbar ist und die Meßlichtquelle (32 bis 34) innerhalb eines die Bearbeitungsoptik aufweisenden Bearbeitungskopfes untergebracht oder an dem Bearbeitungskopf angeordnet ist.

13. Vorrichtung nach Anspruch 12, **dadurch gekennzeichnet, daß** das Meßlicht in der vorbestimmten optischen Achse (10) der vom Werkstück (20) ausgehenden Lichtstrahlung oder näherungsweise gleichachsig oder parallel dazu mit derselben Bearbeitungsoptik erfaßbar ist.

14. Vorrichtung nach Anspruch 12 oder 13, **dadurch gekennzeichnet, daß** ein einziger, zur bedarfsweise ortsauflösenden Beobachtung unterschiedlicher Zonen (I bis III) des Bearbeitungsbereichs des Werkstücks (20) geeigneter Detektor (11) vorhanden ist.

15. Vorrichtung nach einem oder mehreren der Ansprüche 12 bis 14, **dadurch gekennzeichnet, daß** im Strahlengang der Hochenergie- oder Laserstrahlung (1) ein das Meßlicht und/oder die Lichtstrahlung auskoppelndes Bauteil angeordnet ist.

16. Vorrichtung nach einem oder mehreren der Ansprüche 12 bis 15, **dadurch gekennzeichnet, daß** die Meßlichtquelle (32 bis 34) mit dem auskoppelnden Bauteil zusammengebaut oder mit Abstand davor oder dahinter angeordnet ist.

17. Vorrichtung nach einem oder mehreren der Ansprüche 12 bis 16 **dadurch gekennzeichnet, daß** das Meßlicht der Meßlichtquelle (32 bis 34) im Winkel zu der vorbestimmten optischen Achse (10) auf das Werkstück (20) projiziert ist.

18. Vorrichtung nach einem oder mehreren der Ansprüche 12 bis 17, **dadurch gekennzeichnet, daß** das Meßlicht der Meßlichtquelle (32 bis 34) kegel- oder trichtermantelartig und/oder abschnittsweise geradlinig auf das Werkstück (20) projiziert ist.

19. Vorrichtung nach einem oder mehreren der Ansprüche 12 bis 18, **dadurch gekennzeichnet, daß** das Meßlicht der Meßlichtquelle (32 bis 34) bei einer festen Frequenz amplitudenmoduliert ist.

20. Vorrichtung nach einem oder mehreren der Ansprüche 12 bis 19 **dadurch gekennzeichnet, daß** das Meßlicht der Meßlichtquelle (32 bis 34) an unterschiedlichen Beobachtungsstellen des Werkstücks (20) zeitlich nacheinander mit hoher Frequenz wiederholt anwendbar ist.

21. Vorrichtung nach einem oder mehreren der Ansprüche 12 bis 20, **dadurch gekennzeichnet, daß** der Detektor (11) einen sich über mehrere Dekaden von Licht- oder Strahlungsintensitäten erstreckenden Dynamikbereich aufweist.

22. Vorrichtung nach einem oder mehreren der Ansprüche 12 bis 21, **dadurch gekennzeichnet, daß** dem Detektor (11) ein optisches Filtersystem (12) vorgeordnet ist, das Beobachtungszonen (I, II oder III) des Bearbeitungsbereichs begrenzende Eigenschaften besitzt.

## Claims

1. Method for machining workpieces (20) using high energy radiation, in particular a laser beam (1), wherein the beam (1) is focussed onto a machining point (40) by a machining lens system, wherein the light beam emanating from the workpiece (20) and consisting of secondary process radiation and heat radiation, is picked up by the machining lens system and is evaluated by means of a detector (11) of a process monitoring device, and wherein in a machining area of the workpiece (20), by means of an external measuring light source (32 to 34), an optical measurement is carried out on the surface of the workpiece using measuring light reflected from the machining area, **characterised in that** the light beam used for process monitoring and the reflected measuring light are detected using the same machining lens system.

2. Method as claimed in Claim 1, **characterised in that** the light beam used for process monitoring and the reflected measuring light are detected using the same machining lens system co-axially or approximately co-axially to the light beam or axially parallel thereto.

3. Method as claimed in Claim 1 or 2, **characterised in that** as the optical measurement on the surface of the workpiece, the distance between the machining lens system and the workpiece (20) is measured and/or the workpiece geometry in front of the machining point (40) is assessed and/or the weld geometry provided after machining is assessed and/or the melting bath (23) produced at the machining point (40) is assessed.

4. Method as claimed in one or several of Claims 1 to 3, **characterised in that** different zones (I, II, III) of the machining area of the workpiece (20) are detected using a single detector (11).

5. Method as claimed in one or several of Claims 1 to 4, **characterised in that** the area of an interaction zone (22) is used as the first zone (I) of the machining area, the region of the melting bath (23) is used as the second zone (II) which includes the first zone and the whole machining area is used as the third zone (III).

6. Method as claimed in one or several of Claims 1 to 5, **characterised in that** different zones (I to III) of the machining area are detected simultaneously.

7. Method as claimed in one or several of Claims 1 to 6, **characterised in that** the light beam used for process monitoring is secondary radiation originating from the interaction zone (22) and measuring light originating from regions of the machining area surrounding the interaction zone (22) is used as reflected measuring light.

8. Method as claimed in one or several of Claims I to 7, **characterised in that** the entire machining area is detected with local resolution using a detector (11).

9. Method as claimed in one or several of Claims 1 to 8, **characterised in that** a detector (11) is used which comprises sensors disposed line-by-line or in an areal manner.

10. Method as claimed in one or several of Claims 1 to 9, **characterised in that** out of all of the sensors of the detector (11), sensors forming the observation windows of at least two zones (I, II or III) of the machining area are selected for evaluation purposes.

11. Method as claimed in one or several of Claims 1 to 10, **characterised in that** observation windows are altered in terms of position and size in dependence upon detector data and/or results of optical measurements are temporarily not evaluated in dependence upon evaluation data from the detector (11).

12. Device for machining workpieces (20) using high energy radiation, in particular a laser beam (1), having a machining lens system which focuses the beam (1) onto a machining point (40) and which detects the light beam emanating from the workpiece (20) and consisting of secondary process radiation and heat radiation, for a detector (11) of a process monitoring device having a predetermined optical axis, and having an external measuring light source (32 to 34), the measuring light of which, reflected from a machining area of the workpiece (40), is used for an optical measurement on the surface of the workpiece, in particular for carrying out a method of Claims 1 to 11, **characterised in that** the measuring light can be detected using the same machining lens system and the measuring light source (32 to 34) is accommodated within a machining head comprising the machining lens system or is disposed on the machining head.

13. Device as claimed in Claim 12, **characterised in that** the measuring light can be detected in the predetermined optical axis (10) of the light beam emanating from the workpiece (20) or approximately co-axially thereto or in parallel therewith using the same machining lens system.

14. Device as claimed in Claim 12 or 13, **characterised in that** a single detector (11) is provided which is suitable for observation of different zones (I to III) of the machining area of the workpiece (20), with local resolution as required.

15. Device as claimed in one or several of Claims 12 to 14, **characterised in that** a component which decouples the measuring light and/or the light beam is disposed in the beam path of the high energy radiation or laser beam (1).

16. Device as claimed in one or several of Claims 12 to 15, **characterised in that** the measuring light source (32 to 34) is assembled with the decoupling component or is disposed at a spaced disposition in front of or behind this component.

17. Device as claimed in one or several of Claims 12 to 16, **characterised in that** the measuring light from the measuring light source (32 to 34) is projected onto the workpiece (20) at an angle with respect to the predetermined optical axis (10).

18. Device as claimed in one or several of Claims 12 to 17, **characterised in that** the measuring light from the measuring light source (32 to 34) is projected onto the workpiece (20) in the manner of a cone or funnel surface and/or in a straight line in sections.

19. Device as claimed in one or several of Claims 12 to 18, **characterised in that** the measuring light from the measuring light source (32 to 34) is modulated in amplitude at a fixed frequency.

20. Device as claimed in one or several of Claims 12 to 19, **characterised in that** the measuring light from the measuring light source (32 to 34) can be repeatedly applied at a high frequency in a chronologically successive manner at different observation points of the workpiece (20).

21. Device as claimed in one or several of Claims 12 to 20, **characterised in that** the detector (11) comprises a dynamic range extending over several decades of light or radiation intensities.

22. Device as claimed in one or several of Claims 12 to 21, **characterised in that** an optical filter system (12) is disposed in front of the detector (11) and has properties limiting observation zones (I, II or III) of the machining area.

## Revendications

1. Procédé pour usiner des pièces (20) avec un rayonnement à haute énergie, en particulier avec un rayonnement laser (1), selon lequel le rayonnement (1) est focalisé par un système optique d'usinage sur un point d'usinage (40), le rayonnement lumineux qui part de la pièce (20) et qui se compose d'un rayonnement de traitement et d'un rayonnement thermique secondaires est reçu à l'aide du système optique d'usinage et est évalué à l'aide d'un détecteur (11) d'un dispositif de surveillance de traitement, et dans une zone d'usinage de la pièce (20) avec une source de lumière de mesure extérieure (32 à 34), une mesure optique a lieu à la surface de la pièce à l'aide d'une lumière de mesure réfléchie à partir de la zone d'usinage, **caractérisé en ce que** le rayonnement lumineux qui sert à la surveillance du traitement et la lumière de mesure réfléchie sont détectés à l'aide du même système optique d'usinage.

2. Procédé selon la revendication 1, **caractérisé en ce que** le rayonnement lumineux qui sert à la surveillance du traitement et la lumière de mesure qui est réfléchie sont détectés à l'aide du même système optique d'usinage, dans le même axe ou approximativement dans le même axe que le rayonnement lumineux ou parallèlement à l'axe.

3. Procédé selon la revendication 1 ou 2, **caractérisé en ce que** la mesure optique à la surface de la pièce consiste en une mesure de la distance entre le système optique d'usinage et la pièce (20) et/ou en un relevé de la géométrie de la pièce avant le point d'usinage (40) et/ou en un relevé de la géométrie du joint obtenu après l'usinage et/ou en un relevé du bain de fusion (23) produit au niveau du point d'usinage (40).

4. Procédé selon l'une au moins des revendications 1 à 3, **caractérisé en ce que** différentes régions (I, II, III) de la zone d'usinage de la pièce (20) sont détectées avec un seul détecteur (11).

5. Procédé selon l'une au moins des revendications 1 à 4, **caractérisé en ce qu'**on utilise comme première région (I) de la zone d'usinage la zone d'une région d'interaction (22), comme deuxième région (II) couvrant la première la zone du bain de fusion (23), et comme troisième région (III) toute la zone d'usinage.

6. Procédé selon l'une au moins des revendications 1 à 5, **caractérisé en ce que** la détection de différentes régions (I à III) de la zone d'usinage se fait en même temps.

7. Procédé selon l'une au moins des revendications 1 à 6, **caractérisé en ce que** le rayonnement lumineux qui sert à la surveillance du traitement est constitué par le rayonnement secondaire provenant de la région d'interaction (22) et **en ce qu'**on utilise comme lumière de mesure réfléchie la lumière de mesure qui provient de zones de la zone d'usinage qui entourent la région d'interaction (22).

8. Procédé selon l'une au moins des revendications 1 à 7, **caractérisé en ce que** la détection de toute la zone d'usinage se fait à l'aide d'un détecteur (11) avec une résolution locale.

9. Procédé selon l'une au moins des revendications 1 à 8, **caractérisé en ce qu'**on utilise un détecteur (11) qui comporte des capteurs disposés en rangées ou en surface.

10. Procédé selon l'une au moins des revendications 1 à 9, **caractérisé en ce que** parmi tous les capteurs du détecteur (11), on sélectionne pour l'évaluation des capteurs qui forment les fenêtres d'observation d'au moins deux régions (I, II ou III) de la zone d'usinage.

11. Procédé selon l'une au moins des revendications 1 à 10, **caractérisé en ce que** les fenêtres d'observation sont modifiées en positionnement et en taille en fonction des données de détecteur et/ou **en ce que** temporairement, les résultats de mesures optiques ne sont pas évalués, en fonction des données d'évaluation du détecteur (11).

12. Dispositif pour usiner des pièces (20) avec un rayonnement à haute énergie, en particulier avec un rayonnement laser (1), comportant un système optique d'usinage qui focalise le rayonnement (1) sur un point d'usinage (40), qui détecte le rayonnement lumineux partant de la pièce (20) et composé d'un rayonnement de traitement et d'un rayonnement thermique secondaires, pour un détecteur (11) d'un dispositif de surveillance de traitement avec un axe optique défini, et une source de lumière de mesure extérieure (32 à 34) dont la lumière de mesure réfléchie à partir d'une zone d'usinage de la pièce (40) sert à une mesure optique à la surface de la pièce, en particulier pour la mise en oeuvre d'un procédé selon les revendications 1 à 11, **caractérisé en ce que** la lumière de mesure est apte à être détectée à l'aide du même système optique de traitement et la source de lumière de mesure (32 à 34) est logée à l'intérieur d'une tête d'usinage comportant le système optique d'usinage ou est disposée sur la tête d'usinage.

13. Dispositif selon la revendication 12, **caractérisé en ce que** la lumière de mesure est apte à être détectée dans l'axe optique prédéfini (10) du rayonnement lumineux partant de la pièce (20) ou approximativement coaxialement ou parallèlement à celui-ci, avec le même système optique d'usinage.

14. Dispositif selon la revendication 12 ou 13, **caractérisé en ce qu'**il est prévu un seul détecteur (11) adapté pour observer au besoin avec une résolution locale différentes régions (I à III) de la zone d'usinage de la pièce (20).

15. Dispositif selon l'une au moins des revendications 12 à 14, **caractérisé en ce qu'**un composant qui découple la lumière de mesure et/ou le rayonnement lumineux est disposé sur la trajectoire du rayonnement à haute énergie ou laser (1).

16. Dispositif selon l'une au moins des revendications 12 à 15, **caractérisé en ce que** la source de lumière de mesure (32 à 34) est assemblée avec le composant de découplage ou est disposée devant ou derrière celui-ci, à une certaine distance.

17. Dispositif selon l'une au moins des revendications 12 à 16, **caractérisé en ce que** la lumière de mesure de la source de lumière de mesure (32 à 34) est projetée sur la pièce (20) suivant un certain angle par rapport à l'axe optique prédéfini (10).

18. Dispositif selon l'une au moins des revendications 12 à 17, **caractérisé en ce que** la lumière de mesure de la source de lumière de mesure (32 à 34) est projetée sur la pièce (20) suivant une forme d'aire latérale de cône ou d'entonnoir et/ou en ligne droite, par sections.

19. Dispositif selon l'une au moins des revendications 12 à 18, **caractérisé en ce que** la lumière de mesure de la source de lumière de mesure (32 à 34) est modulée en amplitude à une fréquence fixe.

20. Dispositif selon l'une au moins des revendications 12 à 19, **caractérisé en ce que** la lumière de mesure de la source de lumière de mesure (32 à 34) peut être utilisée de manière répétée successivement à une fréquence élevée au niveau de différents points d'observation de la pièce (20).

21. Dispositif selon l'une au moins des revendications 12 à 20, **caractérisé en ce que** le détecteur (11) présente une zone dynamique qui s'étend sur plusieurs décades d'intensités de lumière ou de rayonnement.

22. Dispositif selon l'une au moins des revendications 12 à 21, **caractérisé en ce qu'**on dispose avant le détecteur (11) un système de filtre optique (12) qui a des caractéristiques limitant les régions d'observation (I, II ou III) de la zone d'usinage.
